# DEMANDE DE BREVET EUROPEEN

(11) **EP 2 434 412 A1**
(43) Date de publication de la demande: **28.03.2012**
(21) Numéro de dépôt: 11182616.0
(22) Date de dépôt: 23.09.2011
(51) Int. Cl.: G06F 17/21, G06F 17/24, G06F 17/22, G06F 17/30, G06Q 10/00

(54) **Système pour la génération de documentation technique au format électronique**

(30) Priorité: 24.09.2010 FR 1003791
(71) Demandeur: Thales, 92200 Neuilly Sur Seine (FR)
(72) Inventeur: Gazeau, David, 78851 ELANCOURT CEDEX (FR); Gicquel, Vincent, 78851 ELANCOURT CEDEX (FR)
(74) Mandataire: Brunelli, Gérald

(57) **Abrégé**

L'invention concerne un système pour la génération de documentations techniques relatives à un ou plusieurs équipements adaptées à la lecture sur un dispositif à encre électronique comportant des moyens de stockage (4) de données numériques, caractérisé en ce qu'il comporte en outre :
• des moyens (22) pour la création de publications techniques, lesdites publications techniques étant stockées dans les moyens de stockage (4), et comportant une structure prédéterminée,
• des moyens (23) pour la création de documents électroniques à partir des publications techniques provenant des moyens de stockages (4) et à partir de feuilles de style (19) définissant une mise en page adaptée au dispositif de lecture à encre électronique.

## Description

L'invention concerne la génération de publications techniques, par exemple dans le domaine des équipements militaires.

Selon l'art connu, les publications techniques sont soit éditées sur papier, et stockées dans des classeurs d'archivage; soit visualisables, dans un format électronique, nécessitant l'utilisation d'un ordinateur pour les consulter.

Les documentations techniques papier sont livrées sous forme électronique au format PDF. Une documentation technique est un sous-ensemble d'une publication technique. En d'autres termes, une publication technique regroupe une ou plusieurs documentations techniques

Le personnel doit donc imprimer les documentations nécessaires pour les archiver dans un classeur. Lorsqu'une opération de maintenance sur un équipement doit être effectuée, le papier permet une lecture facile mais le nombre important de documents ne facilite pas la recherche, la mobilité et l'économie de papier.

Pour la consultation de ces publications techniques lors d'une opération de maintenance d'un équipement, un opérateur dispose des solutions suivantes :
- se munir d'une collection complète papier qui est volumineuse pour des équipements complexes,
- se munir d'un ordinateur portable de type tablette à faible autonomie et pesant en moyenne entre 2 et 5 Kg pour accéder aux publications sous forme électronique,
- faire des allées et venues fréquentes pour consulter la documentation sur un ordinateur fixe, ou
- imprimer les procédures au fur et à mesure du besoin.

Ces solutions sont praticables mais absolument pas mobiles. De plus, elles ne permettent pas d'effectuer des recherches pertinentes.

Pour faciliter la consultation de documentations techniques en opérations de maintenance, on souhaite donc avoir recours à des dispositifs à encre électronique (aussi appelés e-paper).

Ces dispositifs ont pour avantages : de permettre une lecture confortable sans reflet, comparable à une lecture classique sur papier, d'être léger et facilement transportable. Une collection complète de publications techniques peut être facilement stockée sur un tel dispositif. Ils disposent d'une autonomie importante par rapport à des ordinateurs portables classiques. Leur utilisation généralisée permettrait de réaliser une économie de papier. Cependant, ces dispositifs comportent un écran de taille limité (de l'ordre d'une dizaine de centimètres) et une interface de navigation restreinte (quelques touches de navigation et un écran tactile). Ainsi, seul un document électronique dont la structure et la mise en page sont adaptées, est réellement exploitable et consultable sur un tel dispositif.

Un des principaux obstacles à l'utilisation des dispositifs à encre électronique est qu'il n'existe pas à l'heure actuelle de système permettant de générer des documents adaptés à une consultation sur ces dispositifs.

Une première solution consiste à transférer directement la documentation papier, sur un dispositif de lecture à encre électronique. Malheureusement, l'interface Homme/Machine manque et l'utilisateur se limite à la lecture simple de la documentation en utilisant les touches de navigation du dispositif pour passer d'une page à une autre. Un des inconvénients est que la police de caractères utilisée n'est pas adaptée et qu'il n'existe pas de navigation via des liens hypertextes. Le document n'est pas adapté.

Une deuxième solution consiste à utiliser un éditeur de type traitement de texte ou éditeur de type WYSIWYG pour créer une documentation possédant des liens, hyperliens d'un élément d'une illustration (ou hotspots), une barre de navigation, un zoom.... Cette solution permet d'obtenir une documentation appropriée mais sa réalisation est alors très longue et fastidieuse.

L'invention vise à pallier les problèmes cités précédemment en proposant un système permettant une génération plus rapide et plus simple de documentations techniques au format électronique adaptées à la consultation sur un dispositif mobile à encre électronique.

A cet effet, l'invention a pour objet un système pour la génération de documentations techniques adaptées à la lecture sur un dispositif à encre électronique comportant des moyens de stockage de données numériques, caractérisé en ce qu'il comporte en outre :
- des moyens pour la création de publications techniques, lesdites publications techniques étant stockées dans les moyens de stockage, et comportant une structure prédéterminée,
- des moyens pour la création de documents électroniques à partir des publications techniques provenant des moyens de stockages et à partir de feuilles de style définissant une mise en page adaptée au dispositif de lecture à encre électronique.

L'invention permet de générer des documents adaptés à la lecture sur un dispositif à encre électronique. L'invention permet de tirer partie des spécificités des publications techniques pour en faciliter leur création. Les publications techniques comportent une structure prédéterminée.

L'invention permet d'exploiter les contenus de documentations techniques modulaires existants.

La séparation du contenu et de la mise en forme accélère la création de publication.

La mise en oeuvre de l'invention est automatique : elle génère donc un gain de productivité sans lequel la création de contenu adapté à la lecture sur un dispositif à encre électronique ne serait pas économiquement viable. Par exemple, le traitement d'une documentation sans l'aide de l'invention peut prendre jusqu'à plusieurs jours alors qu'avec l'invention, le traitement peut être effectué en moins d'une heure.

L'invention permet une consultation des documents techniques alliant les avantages du papier et l'interactivité informatique.

Avantageusement, les moyens pour la création de publications techniques comportent :
- des moyens pour la gestion et la structuration des données permettant de sélectionner une structure de documentation technique répondant à des types d'équipements et de structuration de ces derniers et de créer des modules de données adaptés à la structure sélectionnée, et
- des moyens pour la génération de publications, ladite publication comportant une table des matières référençant les modules de données à assembler selon un ordre et une organisation prédéfinis.

Avantageusement, les moyens pour la génération de publications techniques comportent :
- des moyens pour la vérification permettant de vérifier l'existence des modules de données référencés dans la table des matière relative à la structure de documentation technique sélectionnée et
- des moyens pour l'assemblage regroupant, dans un dossier des moyens de stockage, la publication et les modules de données associés.

Avantageusement, les moyens pour la création de documents électroniques comportent :
- des moyens pour la conversion de données,
- des moyens pour la mise en forme à partir d'une feuilles de style et permettant l'ajout de liens de navigation au travers des modules de données, des chapitres et des illustrations,
- des moyens pour la génération de documents permettant la création d'un fichier consultable sur le dispositif à encre électronique.

Avantageusement, les modules de données comportant des illustrations, les moyens pour la conversion de données comportent des moyens pour subdiviser lesdites illustrations en pluralités de pages, lesdites pages étant dimensionnées en fonction du dispositif de lecture à encre électronique, la subdivision des figures permettant d'effectuer un grossissement de celles-ci, lors de la consultation de la documentation technique sur le dispositif à encre électronique. Cette caractéristique permet de répondre au problème lié à la taille des plans de documentation technique de taille A0 (plan de schéma électrique par exemple) et facilite la lecture de ces plans sur ce type de lecteur dont la taille est bien inférieur.

L'invention sera mieux comprise et d'autres avantages apparaîtront à la lecture de la description détaillée faite à titre d'exemple non limitatif et à l'aide des figures parmi lesquelles :
La figure 1 présente un exemple de mise en oeuvre du système selon l'invention.
La figure 2 illustre un exemple de structure d'une publication technique.
La figure 3 représente un exemple scénario de navigation à l'intérieur d'une documentation finale.

Une documentation technique est un document de présentation structuré d'informations décrivant une tâche ou un équipement par exemple, dans la documentation technique, la description du fonctionnement d'une carte électronique fait l'objet d'un module, son test fait l'objet d'un second module et son démontage fait l'objet d'un troisième module.

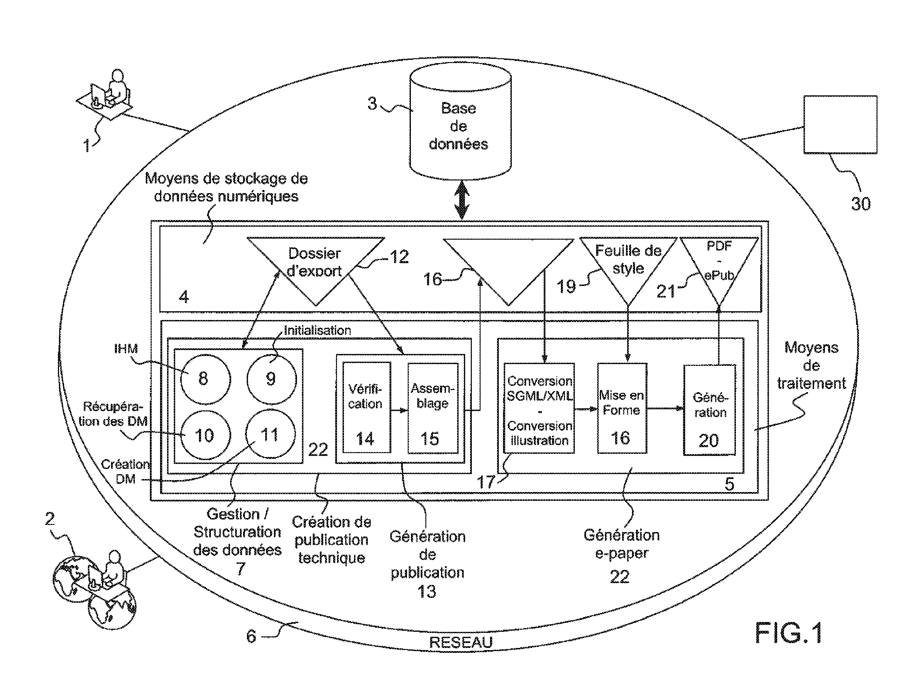

La figure 1 présente un exemple de mise en oeuvre du système selon l'invention. Le système selon l'invention permet la génération de tels documents de façon à ce qu'ils soient adaptés à la consultation sur un dispositif mobile à encre électronique 30. Le système selon l'invention comprend :
- une pluralité d'ordinateurs 1,2 communiquant entre eux par l'intermédiaire d'un réseau informatique 6,
- une base de données 3 regroupant des informations techniques.

Les informations techniques sont stockées dans la base de données 3 sous la forme de modules de données, d'illustrations et de publications. Des codes structurés permettent d'identifier, de classer et de rechercher ces différentes informations dans la base de données 3 : les TPC (pour Technical Publication Code) pour les publications, des DMC (pour Data Module Code) pour les modules de données, et des ICN (pour Illustration Control Number) pour les illustrations.

Un module de données est une unité d'information autonome et réutilisable comprenant des descriptions, des illustrations, des objets, des procédures ou des données opérationnelles pour un matériel ou un composant. Il est identifiable par son code de module de données DMC ce qui lui permet d'être classé et retrouvé dans la base de données 3 du serveur de production.

Un module de données comprend aussi un identifiant, un statut et un contenu. Un module de données décrit un équipement (par exemple un radar) ou une partie d'équipement (par exemple un sous ensemble comme les servos mécanismes). Un module de données est affecté à un ou plusieurs niveaux de maintenance. En effet, la maintenance d'un équipement peut comporter plusieurs niveaux. Par exemple, un premier niveau de routine peut être réalisé chez l'utilisateur et un second niveau plus complexe est réalisé chez le fournisseur de l'équipement.

Le statut du module de données contient par exemple des informations de gestion sur la sécurité, la confidentialité, la société responsable, l'applicabilité, la date de dernière révision, la raison de mise à jour et l'indicateur assurance-qualité.

Les modules de données stockés dans la base de données 3 participent à la constitution des publications. La publication technique est rédigée dans le cadre d'un projet aussi appelé affaire. Une affaire est notamment caractérisée par un client et un ou plusieurs équipements livrés à ce client et qui font l'objet d'une documentation technique. La publication technique comprend l'ensemble des fichiers décrivant le contenu de la documentation technique mais pas sa mise en forme.

Chaque publication est associée à un fichier de définition dit DTD (Document Type Definition) décrivant la structure de la publication et l'agencement des modules de données qui la constituent. La structure de la publication décrit notamment : (i) le type d'informations que l'on peut y trouver par exemple la description et le fonctionnement d'un équipement, les procédures, la localisation de pannes, la maintenance préventive et corrective, le catalogue illustré, le personnel navigant et (ii) l'organisation en chapitre et sous chapitre.

Une publication est structurée avec des éléments par exemple décrits en SGML ou en XML et qui se regroupent en plusieurs familles : fonction, statut, données techniques, pré-requis, information, illustration, navigation, applicabilité, révision, publication.

On rappelle que le SGML et le XML sont des langages de description de fichier normalisés utilisant notamment des balises.

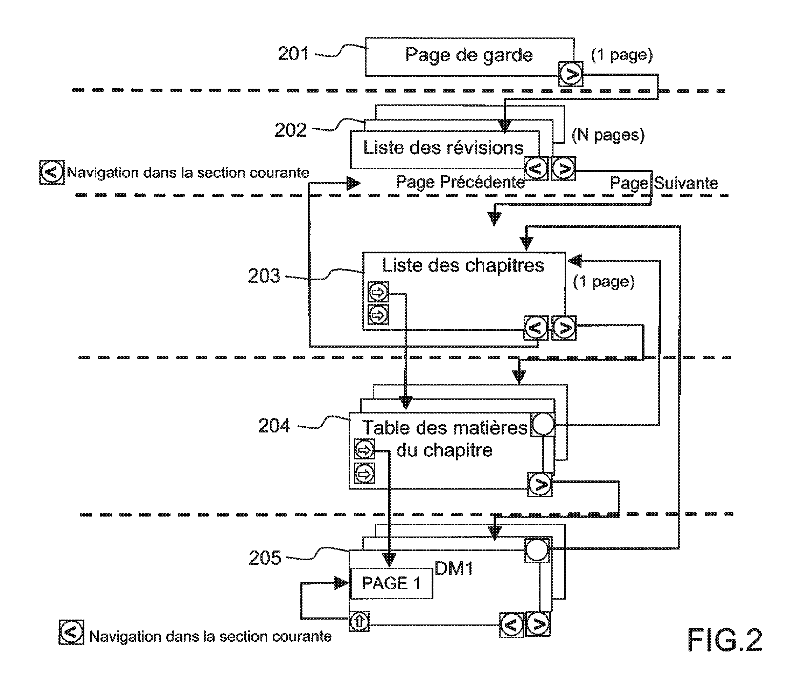

La figure 2 illustre un exemple de structure d'une publication technique. La publication technique comprend:
- une page de garde 201,
- une liste des révisions 202, décrivant les modifications successives de la publications,
- une liste des chapitres 203 constituant la publication,
- une table des matières 204 pour chacun des chapitres de la publication,
- et des modules de données 205 pour chacun des chapitres.

Chacune des flèches représente un lien hypertexte permettant de naviguer depuis un élément de la publication (par exemple la liste des chapitres vers un autre (par exemple vers un chapitre particulier).

Les ordinateurs 1, 2 sont utilisés par des rédacteurs techniques pour rédiger une publication technique. Un ordinateur comprend des moyens de stockage 4 de données numériques (par exemple un disque dur, ou un support de type USB) et des moyens de traitement 5 (comprenant par exemple un microprocesseur, de la mémoire vive...) adaptés pour exécuter des modules enregistrés sur des moyens de stockage 4. Deux modules 22, 23 sont installés sur l'ordinateur dudit rédacteur technique.

Un premier module 22 permet de créer une publication technique qui servira de donnée d'entrée pour un deuxième module 23. Le premier module 22 comporte : des moyens pour la gestion et la structuration des données 7 et des moyens pour la génération de publications 13.

Les moyens pour la gestion et la structuration des données 7 comportent :
- une interface Homme/Machine 8 par laquelle le rédacteur technique interagit avec le premier module 22 pour créer une publication technique, la publication étant vierge au démarrage de l'affaire;
- une fonction d'initialisation d'affaire 9, permettant au rédacteur technique de sélectionner la DTD qu'il souhaite exploiter. Une affaire fournit la structure de création des modules de données à traiter sur la base de données 3 ;
- une fonction de création de modules de données 11. Le module de donnée créé est, par exemple au format XML ou SGML, et comporte des rattachements vers toutes les informations et illustrations que le rédacteur technique souhaite incorporer dans sa publication;
- une fonction de recherche et de sélection des modules de données 10 pour composer une publication rattachée à cette affaire. Chaque module de données créé est ajouté à une liste de modules de données et est déplaçable vers une partie logique de la structure de publication par exemple par glisser - déposer. Un dossier d'export 12 est ainsi constitué et enregistré sur le moyen de stockage 4.

Les moyens pour la génération de publication 13 comporte des moyens pour la vérification 14 et des moyens pour l'assemblage 15.

Les moyens pour la vérification 14 sont configurés pour parcourir le dossier d'export 12 et vérifier que chaque module de données rattaché à la publication existe bien dans la base de données 3 et affichent un rapport d'erreurs de vérification. Ces moyens permettent également de vérifier le contenu des modules de données rattachés. Ces moyens de vérifications comprennent un parseur parcourant le contenu des fichiers et vérifiant que leurs balises sont conformes à la norme. Contrairement à une génération de documentation dite classique, des informations sont spécifiques au dispositif de lecture à encre électronique. En effet, les moyens pour la vérification 14 permettent de filtrer et de supprimer des éléments contenus dans les modules de données, avant l'assemblage (par exemple les données concernant les fournisseurs sont supprimées du contenu des modules).

Les moyens pour l'assemblage 15 réalisent une opération de copie des modules attachés directement depuis la base de données 3 vers les moyens de stockage 4. La publication est constituée de l'ensemble des modules de données sélectionnés par le rédacteur technique. L'ordre et le chapitrage des modules de données à assembler sont référencés dans un fichier de publication sous la forme d'une table des matières.

Les modules de données sont liés au fichier de publication via une arborescence où chaque module de donnée constitue un dossier (16) contenant un fichier SGML ou XML ainsi qu'une ou plusieurs illustrations associées à ce module de données.

Avantageusement, un modèle de fichier est ajouté pour la création et la gestion des Fiches d'Intervention Technique (FIT). Une FIT est un objet complémentaire de la documentation. Elle permet de noter les interventions effectuées sur un équipement pour en assurer la traçabilité.

De plus, les données nécessaires à la charte graphique de la documentation e-Paper (barre de navigation, logo, boutons, icones) sont automatiquement enregistrées dans un dossier d'illustration temporaire sur le moyen de stockage. Cette charte graphique est modifiable à la condition de respecter les noms de chaque fichier.

La documentation technique peut contenir des éléments de sécurité type : secret défense ou confidentiel défense. Dans ce cas, les pages contenant ce niveau de sécurité seront reconnues et notifié dans la documentation technique au format e-Paper par un symbole ou un logo.

Toutes ces données assemblées sont enregistrées sur le moyen de stockage 4 de données dans un dossier 16. Ce dossier 16 constitue l'entrée pour le deuxième module 23.

Le deuxième module 23 pour la génération de documents électroniques comporte des moyens pour la conversion de données 17, des moyens pour la mise en forme 18 et des moyens pour la génération de documents 20.

Les moyens pour la conversion 17 des données permettent de convertir les données d'entrée au format XML si besoin. Les illustrations sont converties vers des formats d'images tels que le JPEG ou SVG. La conversion des illustrations permet d'obtenir un fichier final ne dépassant une certaine limite en taille par exemple 5 Mégaoctets. Ces moyens permettent également de subdiviser les illustrations en vue de simuler une fonction de zoom. La subdivision respecte par exemple la règle suivante : un format A4 correspond à une page, un A3 à deux pages, un A2 à quatre pages, un A1 à huit pages et un A0 à seize pages.

Les moyens pour la mise en forme 18 permettent de mettre en forme la publication vérifiée, assemblée et réduite, à l'aide d'une feuille de style 19. Cette feuille de style 19 indique notamment la police de caractère, la taille des caractères, les sauts de pages, les marges, etc., à utiliser pour chaque partie logique de l'ensemble du fichier de publication 16 : chapitre, section, paragraphe, texte mis en évidence, notes, etc.. La mise en forme s'inspire par exemple de normes aéronautiques. Les moyens pour la mise en forme 18 permettent d'intégrer les liens permettant la navigation à l'intérieur de la documentation. Il existe notamment des liens entre les différents chapitres, les illustrations découpées pour les zooms, la page de garde, la liste des révisions, la liste de matières, la table des matières du chapitre. Le texte d'un module de données comprend des liens vers d'autres modes de données, vers des illustrations. Dans une illustration, les repères comprennent un lien vers la page de nomenclature.

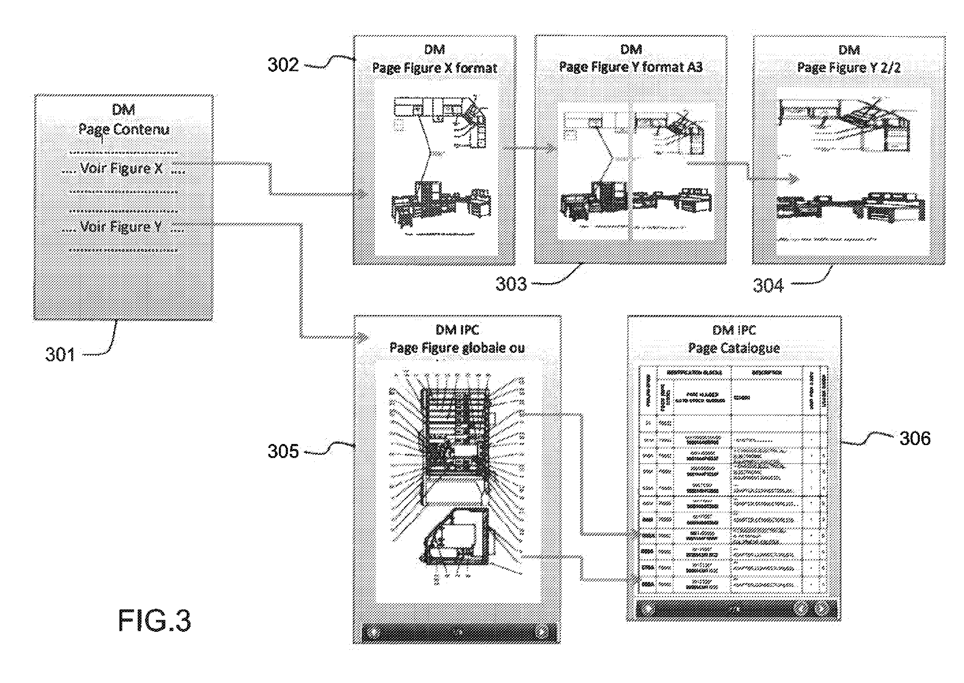

La figure 3 représente un exemple scénario de navigation à l'intérieur d'une documentation finale. Ce scénario comprend différentes pages reliées entre elles par des flèches symbolisant des liens hypertextes permettant la navigation d'une page vers l'autre. Une première page 301 représente un contenu d'un module donnée comprenant un premier lien hypertexte vers une figure X et un deuxième lien hypertexte vers une figure Y. En cliquant sur le premier lien, on accède à une page 302 représentant la figure X dans son ensemble. Cette figure peut être agrandie de la façon suivante. En cliquant sur la figure, on accède à une page 303 proposant un découpage en deux sous figures et en sélectionnant l'une de ces deux sous figure, on accède à une page 304 affichant la portion de figure sectionnée agrandie.

En cliquant sur le deuxième lien de la première page, on accède à une page 305 représentant la figure Y qui, dans l'exemple, est une page de représentation d'un équipement comportant des références pour chaque pièce constituant cet équipement. En cliquant sur l'une de ces références, on accède à une page 306 dite de catalogue comportant un tableau avec une référence de la pièce et une brève description.

Les moyens pour la génération de documents 20 permettent la génération d'un document 21 au format textuel de type PDF ou dans un format pour dispositif de lecture à encre électronique de type ePub et enregistre ce document final 21 dans les moyens de stockage 4.

Ainsi, ces derniers contiennent les publications finales (21), telles qu'elles seront livrées aux clients respectifs. La publication finale (21) est autonome c'est-à-dire fonctionnant sans accès à un serveur, Le dispositif de lecture étant suffisant pour la consulter et bénéficier de son interactivité.

Il n'existe pas dans l'état de la technique de format de documentation technique adapté pour la consultation avec cette technologie.

Même si un dispositif à encre électronique peut lire des documents au format HTML, XHTML, MOBI, DOC, TXT, PDF, ePub... le choix du format PDF ou ePub est motivé par les raison suivantes :
Le format de fichier PDF est un format de description offrant une représentation exacte de n'importe quel document préexistant. Il a pour avantage de conserver tous les détails d'une mise en page donnée ainsi que les liens hypertextes entre les pages. Il a pour inconvénient de ne pas adapter cette mise en page à des écrans de taille variable. Les pages d'un document PDF ont une dimension fixe. Ces fichiers ne disposent pas de liens hypertextes. La navigation se fait donc par les touches de navigations du dispositif de lecture à encre électronique. Les autres fonctions liées à la lecture d'un document (recherche, zoom, ajout de commentaires) sont prises en charges par le dispositif à encre électronique. L'utilisation de ce format ne permet la prise en compte des fiches d'intervention technique.
Les formats adaptés à la lecture sur des dispositifs à encre électronique (par exemple le format ePub - pour Electronic Publication) sont des formats dans lequels le texte, les polices de caractères, les images et les informations de mise en forme sont codées et stockées séparément puis assemblées au moment de l'affichage. En séparant ainsi la forme et le contenu, ces formats permettent de concevoir une mise en page sophistiquée et intelligente, capable de se recomposer « à la volée » en fonction des dimensions du support sur lequel elle s'affiche. Un des avantages est le passage et l'adaptation sans difficultés d'un dispositif à encre électronique à un ordinateur. L'inconvénient majeur étant que tous les supports ne savent pas encore lire ce type de format. De plus, les règles de composition classiques du texte ne sont pas forcément respectées.
Les moyens pour la génération de document permettent d'obtenir une documentation technique interactive 21. Cette documentation 21 est ensuite envoyée aux opérateurs de maintenance par email, CDROM, via un portail Web ou envoyée sur des composants mémoires (Memory Stick, SD CARD, Compact Flash, MMC...) pour être inséré directement dans le dispositif de lecture à encre électronique.
Les dispositifs à encre électronique comportent des composants électroniques le rendant communicant et permettant notamment : d'obtenir et de l'alimenter en informations et de récupérer les informations annotées.

Ceci permet facilement de communiquer avec le système selon l'invention qui prépare l'information à consulter sur le dispositif à encre électronique mais également de récupérer les informations saisies sur le terrain pour les traiter et les capitaliser.

Les dispositifs à encre électronique 30 comportent des moyens pour annoter les documents consultés et des moyens pour transmettre ces annotations.

Avantageusement, le système comprend, en outre, des moyens pour la réception d'annotations concernant les documentations techniques générées. Les annotations sont stockés avec les autres informations liées à la documentation technique.

Grâce à l'usage de la surface d'affichage du dispositif à encre électronique 30, il est possible pour les opérateurs de maintenance d'annoter l'information consultée à l'aide d'un appareil de saisie (clavier ou stylet par exemple) directement visualisable sur l'écran. Les annotations peuvent être portées directement sur l'information consultée ou sur des pages blanches. Cette fonctionnalité permet par conséquent de capitaliser l'information produite par les opérateurs de maintenance en situation opérationnelle.

L'invention possède un outil de traitement des annotations manuscrites. Ainsi, les opérateurs munis de stylet peuvent apposer des remarques de façon manuscrite sur les documents. Les annotations sont incrustées sur la page où elles ont été posées, elles restent visibles à chaque réouverture de la page. Elles peuvent rester sur la page ou être exploitées via des systèmes de reconnaissance de caractères dits OCR (Optical Character Recognition) puis traitées. Le traitement consiste à récupérer l'ensemble des annotations éditées par différents utilisateurs sous forme de fichier. Les fichiers sont exploités par les rédacteurs technique qui mettent à jour les sources documentaires, et réutilisent l'invention pour proposer une documentation mise à jour aux utilisateurs.

Avantageusement, le système comprend, en outre des moyens pour la réception et pour le traitement de fiches d'intervention technique utilisées pour tracer des interventions effectuées sur un équipement, le dispositif à encre électronique 30 comportant des moyens pour remplir et les fiches d'intervention technique et des moyens pour transmettre les fiches d'intervention technique. Comme pour les annotations ces moyens mettent en oeuvre des systèmes de reconnaissance de caractères.

## Revendications

1. Système pour la génération de documentations techniques relatives à un équipement et adaptées à la lecture sur un dispositif à encre électronique comportant des moyens de stockage (4) de données numériques, **caractérisé en ce qu'**il comporte en outre :
• des moyens (22) pour la création de publications techniques, lesdites publications techniques étant stockées dans les moyens de stockage (4) et comportant une structure prédéterminée, les moyens (22) pour la création de publications techniques comprennent :
o des moyens pour la gestion et la structuration des données (7) permettant de sélectionner une structure de documentation technique et de créer des modules de données adaptés à la structure sélectionnée, un module de données étant une unité d'information autonome et réutilisable comprenant des descriptions, des illustrations, des procédures ou des données opérationnelles pour un composant d'un équipement,
o des moyens pour la génération de publications techniques (13), ladite publication comportant une table des matières (204) référençant les modules de données à assembler selon un ordre et une organisation prédéfinis, et au moins une des informations suivantes : une description du fonctionnement de l'équipement, une procédure de localisation de panne dans l'équipement, une procédure de maintenance de l'équipement ou une illustration dont les repères comportent des liens vers une page de nomenclature de l'équipement.
• des moyens (23) pour la création de documents électroniques à partir des publications techniques provenant des moyens de stockages (4) et à partir de feuilles de style (19) définissant une mise en page adaptée au dispositif de lecture à encre électronique.

2. Système selon la revendication 1, dans lequel les moyens (13) pour la génération de publications techniques comportent :
• des moyens pour la vérification (14) permettant de vérifier l'existence des modules de données référencés dans la table des matière relative à la structure de documentation technique sélectionnée et
• des moyens pour l'assemblage (15) regroupant, dans un dossier des moyens de stockage, la publication et les modules de données associés.

3. Système selon l'une des revendications 1 ou 2, dans lequel les moyens (23) pour la création de documents électroniques comportent:
• des moyens pour la conversion de données (17),
• des moyens pour la mise en forme (18) à partir d'une feuilles de style (19) et permettant l'ajout de liens de navigation au travers des modules de données, des chapitres et des illustrations,
• des moyens pour la génération de documents (20) permettant la création d'un fichier consultable sur le dispositif à encre électronique.

4. Système selon la revendication 3, dans lequel, les modules de données comportant des illustrations, les moyens pour la conversion de données (17) comportent des moyens pour subdiviser lesdites illustrations en pluralités de pages, lesdites pages étant dimensionnées en fonction du dispositif de lecture à encre électronique, la subdivision des figures permettant d'effectuer un grossissement de celles-ci, lors de la consultation de la documentation technique sur le dispositif à encre électronique.

5. Système selon l'une des revendications précédentes comprenant, en outre, des moyens pour la réception et pour le traitement d'annotations concernant les documentations techniques générées, le dispositif à encre électronique comportant des moyens pour annoter les documents consultés et des moyens pour transmettre les annotations.

6. Système selon l'une des revendications précédentes comprenant, en outre, des moyens pour la réception et pour le traitement de fiches d'intervention technique utilisées pour tracer des interventions effectuées sur un équipement, le dispositif à encre électronique comportant des moyens pour remplir et les fiches d'intervention technique et des moyens pour transmettre les fiches d'intervention technique.
